# EUROPÄISCHE PATENTSCHRIFT

(11) **EP 2 834 542 B1**
(45) Veröffentlichungstag und Bekanntmachung des Hinweises auf die Patenterteilung: **22.11.2017**
(21) Anmeldenummer: 13719270.4
(22) Anmeldetag: 04.04.2013
(51) Int. Cl.: F16H 61/4104

(54) **GESCHLOSSENER HYDRAULISCHER KREISLAUF**
CLOSED HYDRAULIC CIRCUIT
CIRCUIT HYDRAULIQUE FERMÉ

(30) Priorität: 05.04.2012 DE 102012102978
(43) Veröffentlichungstag der Anmeldung: 11.02.2015
(73) Patentinhaber: Fluitronics GmbH, 47807 Krefeld (DE)
(72) Erfinder: STAMMEN, Christian, 41564 Kaarst (DE)
(74) Vertreter: Griepenstroh, Jörg
(86) Internationale Anmeldenummer: PCT/DE2013/100123
(87) Internationale Veröffentlichungsnummer: WO 2013/149618

(56) Entgegenhaltungen:
- EP-A1- 2 341 190
- DE-A1-102010 006 464
- US-A1- 2004 187 491
- US-B1- 6 263 670

## Beschreibung

Die Erfindung betrifft einen geschlossenen hydraulischen Kreislauf gemäß den Merkmalen des Patentanspruchs 1.

In einem geschlossenen hydraulischen Kreislauf werden mit kleinen Druckmittelvolumina sehr große Leistungen übertragen. Die dabei entstehenden Verluste führen zu einer starken Erwärmung des Druckmittels. Daher muss die Betriebstemperatur des zirkulierenden Druckmittels durch zusätzliche Maßnahmen in einem gewünschten Bereich gehalten werden. Außerdem treten bei den in einem geschlossenen hydraulischen Kreislauf eingesetzten Hydropumpen und Hydromotoren sowie auch bei sonstigen hydraulischen Bauteilen Leckageverluste auf, die ausgeglichen werden müssen.

Stand der Technik ist eine sogenannte Spülung des geschlossenen hydraulischen Kreislaufs über eine zusätzliche Pumpe (Spülpumpe). Die Spülpumpe fördert Druckmittel in die Niederdruckseite des hydraulischen Kreislaufs. Über die Spülpumpe können die Leckageverluste ausgeglichen werden. Bei geeigneter Wahl des Druckniveaus der Niederdruckseite ist es möglich, die Spülpumpe gleichzeitig zur Versorgung der hydraulischen Anlage mit Steueröl zu nutzen.

Die Kühlung des Druckmittels erfolgt über die Anordnung eines Kühlers im Druckmittelstrom, vorzugsweise in einem Bereich geringen Drucks, wie z. B. hinter einem Spülventil, durch welchen das in den hydraulischen Kreislauf eingebrachte Druckmittel wieder ausgespeist wird. Alternativ kann das Druckmittel über einen Nebenkreislauf im Tank gekühlt werden.

Das Spülventil verbindet die Niederdruckseite mit einer Ableitung des Druckmittels aus dem Kreislauf. Liegt die Niederdruckseite bei einer spezifischen Antriebsaufgabe fest, kann das Spülventil entfallen und der Ausgangsanschluss kann an die Niederdruckseite angeschlossen werden. Das abgeleitete Druckmittel wird in diesem Fall über ein Druckventil, z. B. ein Druckbegrenzungsventil zum Tank geleitet. Das Druckbegrenzungsmittel stellt das Druckniveau in der Niederdruckseite ein. Bei wechselnder Zuordnung, d. h. bei einem Wechsel von Hoch- und Niederdruckseite ist ein Spülventil hingegen unerlässlich.

In geschlossenen Kreisläufen, die Differentialzylinder als Verbraucher beinhalten (teilweise als "halboffene Kreisläufe" bezeichnet), müssen die sich aus dem Flächenunterschied ergebenden Volumenströme ebenfalls durch die Spülpumpe bzw. die Ausspeisung ausgeglichen werden.

Übliche Volumenströme für die Kühlung und Spülung liegen im Bereich von 10 % bis 20 % des zirkulierenden Druckmittelstroms. In halboffenen Kreisläufen werden Sie maßgeblich vom Flächenverhältnis der Differentialzylinder mitbestimmt. Übliche Drücke in der Niederdruckseite geschlossener hydraulischer Kreisläufe betragen 20 bar bis 30 bar. Bei Volumenströmen von 30 l bis 60 l pro Minute betragen die für die Spülung notwendigen hydraulischen Leistungen 1 kW bis 3 kW. Diese Leistung wird ebenfalls in Wärme umgesetzt und muss zusätzlich bei der Dimensionierung der Kühlung berücksichtigt werden. Hinzu kommen die weiteren Verluste in der Spülpumpe.

Das hat zur Folge, dass eine um den Kehrwert des Pumpenwirkungsgrades höhere Leistung von dem Antriebsmotor des geschlossenen hydraulischen Kreislaufs abgenommen wird, die allerdings nicht für den Abtrieb, d. h. den Betrieb der Hydropumpe in dem geschlossenen hydraulischen Kreislauf zur Verfügung steht.

Zum Stand der Technik ist die DE 10 2010 006 464 A1 zu nennen, welche einen geschlossenen hydraulischen Kreislauf zwischen einer Hydropumpe und einem Hydromotor offenbart, welche über Arbeitsleitungen miteinander verbunden sind. Es ist eine Spülpumpe vorgesehen, um Druckmittel in die Arbeitsleitungen einzuspeisen. Es ist ferner ein Ausgangsanschluss vorgesehen, um überschüssiges Druckmittel aus den Arbeitsleitungen auszuspeisen. Dem Ausgangsanschluss ist mindestens ein hydraulischer Verbraucher nachgeschaltet, welcher dafür vorgesehen ist, den aus dem hydraulischen Kreislauf ausgespeisten Volumenstrom zumindest teilweise in mechanische Leistung umzusetzen. Ein solcher geschlossener hydraulischer Kreislauf wird auch durch die EP 2 341 190 A1 offenbart.

Der Erfindung liegt die Aufgabe zugrunde, einen geschlossenen hydraulischen Kreislauf aufzuzeigen, bei welchem der Anteil der Verluste reduziert werden kann.

Diese Aufgabe wird durch einen geschlossenen hydraulischen Kreislauf mit den Merkmalen des Patentanspruchs 1 gelöst.

Vorteilhafte Weiterbildungen der Erfindung sind Gegenstand der Unteransprüche.

Der geschlossene hydraulische Kreislauf sieht eine Hydropumpe und einen Hydromotor vor, die über Arbeitsleitungen miteinander verbunden sind. Über eine zusätzlich vorgesehene Spülpumpe wird Druckmittel in die Arbeitsleitungen eingespeist. Zudem ist ein Ausgangsanschluss vorgesehen, um überschüssiges Druckmittel wieder aus den Arbeitsleitungen auszuspeisen.

Die Hydropumpe sowie der Hydromotor können reversibel arbeiten, d. h. sowohl Antriebsleistung abgeben als auch aufnehmen. Es kann sich beispielsweise beim Bremsen eine negative Last ergeben, so dass der Hydromotor als Pumpe arbeitet und die Hydropumpe dadurch angetrieben wird. Im Rahmen der Erfindung bezeichnet eine Hydropumpe mithin den bevorzugten Betriebszustand dieses Hydraulikaggregats, nämlich den Pumpbetrieb, während ein Hydromotor primär angetrieben wird. Die Erfindung schließt jedoch beim Bremsen entstehende negative Lasten im Bereich des Antriebs nicht aus. Durch die Nutzung der Bremsenergie kann der Hydromotor Energie einsparen. Die eingesparte bzw. zusätzlich rückgewonnene Energie kann weiteren Verbrauchern zur Verfügung gestellt werden.

Das Besondere bei dem erfindungsgemäßen geschlossenen hydraulischen Kreislauf ist, dass dem Ausgangsanschluss für den Spülölstrom mindestens ein hydraulischer Verbraucher nachgeschaltet ist, welcher dafür vorgesehen ist, den aus dem hydraulischen Kreislauf ausgespeisten Volumenstrom zumindest teilweise in mechanische Leistung umzusetzen. Der hydraulische Verbraucher ist ein Hydraulikmotor, der direkt oder indirekt, d. h. unmittelbar oder unter Zwischenschaltung eines Getriebes weitere Komponenten antreibt, d. h. die hydraulische Leistung in mechanische Leistung umsetzt. Besonders bevorzugt wird die mechanische Leistung auf die Antriebswelle der Spülpumpe zurückgeführt. Selbstverständlich kann die mechanische Leistung auch zum Antrieb von Nebenaggregaten verwendet werden.

Mit der Erfindung wird der Spülstrom energierückgewinnend genutzt, so dass bei gleicher Leistung des Hydromotors im hydraulischen Kreislauf die Antriebsleistung für die Hydropumpe reduziert werden kann. Handelt es sich bei dem Antrieb für die Hydropumpe um einen Verbrennungsmotor, bedeutet dies, dass der Kraftstoffverbrauch für den Verbrennungsmotor reduziert werden kann. Die Kosten für einen hydraulischen Verbraucher in Form eines Hydromotors sind relativ gering, wohingegen die Kosten für fossile Brennstoffe relativ hoch sind. Mit dem erfindungsgemäß gestalteten geschlossenen hydraulischen Kreislauf ist es möglich, den Mehraufwand für den hydraulischen Verbraucher innerhalb kürzester Zeit zu amortisieren. Dies gilt insbesondere für geschlossene hydraulische Kreisläufe bei mobilen Anwendungen, die hohe Laufleistungen haben, insbesondere für hydrostatische Fahrantriebe für mobile Arbeitsmaschinen, insbesondere für Bagger.

Der hydraulische Verbraucher kann insbesondere ein Zahnradmotor sein. Falls andere Nebenaggregate als hydraulischer Verbraucher angetrieben werden sollen, sollte es sich hierbei nicht um prozesskritische Nebenaggregate handeln, die ständig mit Hydrauliköl versorgt werden müssen. Vielmehr können Hilfsmotoren, Lüfterpumpen sowie Aggregate, die nur zeitweise angetrieben werden müssen, mittels des ausgespeisten Volumenstroms angetrieben werden, also Aggregate, bei denen eine ungleichmäßige Geschwindigkeit oder ein kurzzeitiger Stillstand nicht systemkritisch ist.

Unter einem Nebenaggregat im weitesten Sinne ist auch ein Energiespeicher zu verstehen, der das Hydraulikfluid zu einem späteren Zeitpunkt wieder abgibt und damit wieder Energie in einen Kreislauf einbringt.

Im Rahmen der Erfindung können mehrere hydraulische Verbraucher vorgesehen sein. Es können Verbraucher unterschiedlicher Art und unterschiedlicher Leistungsstufen sein.

Die Verwendung von Hydromotoren, ermöglicht sowohl den Einsatz von Hydromotoren mit festem Schluckvolumen, d. h. von Hydromotoren, bei denen je Umdrehung ein konstanter Volumenstrom benötigt wird, als auch den Einsatz von Hydromotoren mit verstellbarem Schluckvolumen. Letztere werden vorzugsweise in Druckregelung betrieben.

In vorteilhafter Weiterbildung ist zusätzlich zu dem wenigstens einen hydraulischen Verbraucher ein Druckbegrenzungsventil vorgesehen, um Druckspitzen in der Niederdruckseite des hydraulischen Kreises zu vermeiden. Das Druckbegrenzungsventil ist zu dem hydraulischen Verbraucher parallel geschaltet.

Ergänzend kann der hydraulische Verbraucher über ein vorgeschaltetes Druckventil angeschlossen sein. Das Druckventil ist ein Druckfolgeventil. Es bewirkt, dass auf der Eingangsseite ein Mindestdruck anliegen muss, bevor es öffnet. Eingangsseitig liegt der Druck an, der an der Niederdruckseite des hydraulischen Kreislaufs herrscht. Um sicherzustellen, dass das Druckmittel immer dem hydraulischen Verbraucher zuströmt, muss an dem Druckfolgeventil ein niedrigerer Druck eingestellt werden als an dem Druckbegrenzungsventil, das ebenfalls an den Ausgang des Spülventils angeschlossen ist.

Je nach Art der Nutzung der Nutzung der mechanischen Leistung kann es von Vorteil sein, den hydraulischen Verbraucher mit einem Nachsaugventil auszurüsten, das mit einem Tank oder einer Rücklaufleitung eines eventuell vorhandenen offenen Kreislaufs verbunden ist. Wenn nicht genug Volumenstrom für die Versorgung des hydraulischen Verbrauchers zur Verfügung steht, ist durch das Nachsaugventil dennoch ein problemloser Betrieb möglich, auch wenn in diesem Fall die Energierückgewinnung entfällt. Dadurch kann eine Auslegung dergestalt erfolgen, dass in einigen wenigen Betriebszuständen oder bei extremen Betriebsparametern auf die Energierückgewinnung bewusst verzichtet wird, um dafür in anderen, häufigen Betriebszuständen eine umso höhere Energierückgewinnung zu ermöglichen. Für die Verwendung in halboffenen Kreisläufen ist diese Ausführung ebenfalls vorteilhaft.

Die Erfindung wird nachfolgend anhand von in den Zeichnungen dargestellten Ausführungsbeispielen erläutert. Es zeigt:
- Figur 1: den Stand der Technik bei einem geschlossenen hydraulischen Kreislauf;
- Figur 2: eine erste Ausführungsform eines geschlossenen hydraulischen Kreislaufs mit einem zusätzlichen hydraulischen Verbraucher;
- Figur 3: eine zweite Ausführungsform eines geschlossenen hydraulischen Kreislaufs mit parallel zu dem hydraulischen Verbraucher geschalteten Druckbegrenzungsventil;
- Figur 4: eine dritte Ausführungsform eines geschlossenen hydraulischen Kreislaufs mit einem Druckfolgeventil und
- Figur 5: eine vierte Ausführungsform eines geschlossenen hydraulischen Kreislaufs mit festgelegter Hochdruckseite.

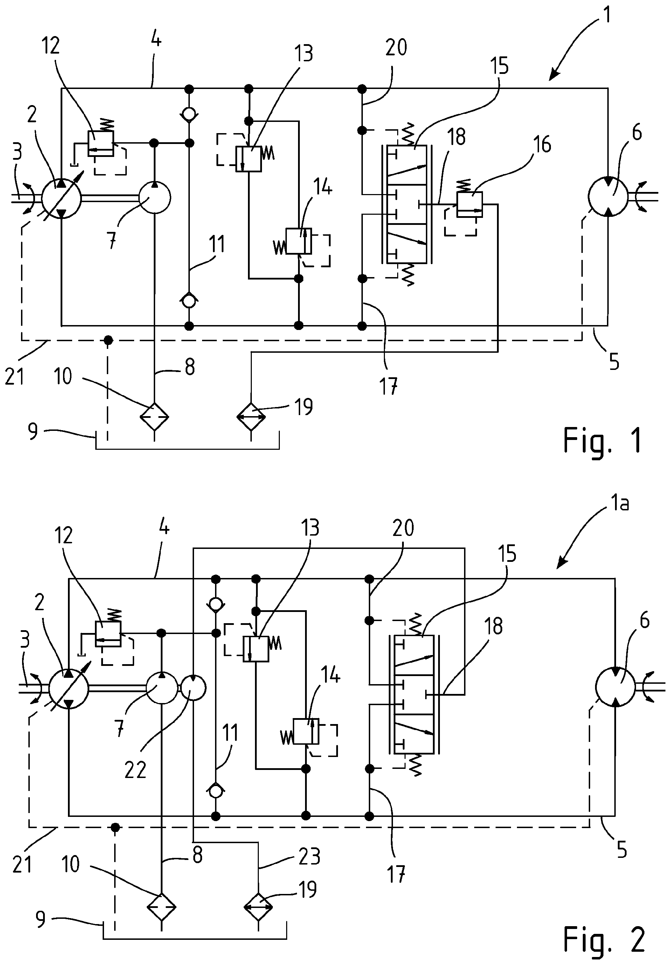

Figur 1 zeigt einen geschlossenen hydraulischen Kreislauf 1 mit einer verstellbaren Hydropumpe 2 zur Förderung eines Druckmittels. Die Hydropumpe 2 wird über eine Antriebswelle 3 angetrieben. Bei dem nicht dargestellten Antrieb der Antriebswelle 3 handelt es sich beispielsweise um eine Verbrennungskraftmaschine, insbesondere einen Dieselmotor. Die Hydropumpe 2 ist über eine erste Arbeitsleitung 4 und eine zweite Arbeitsleitung 5 mit einem Hydromotor 6 im geschlossenen Kreislauf verbunden. Sowohl die Hydropumpe 2 als auch der Hydromotor 6 sind in dem dargestellten Ausführungsbeispiel reversibel.

Zusätzlich zu der Hydropumpe 2 ist eine Spülpumpe 7 mit der Antriebswelle 3 verbunden. Die Spülpumpe 7 dient zum Einspeisen eines Druckmittels in den geschlossenen hydraulischen Kreislauf 1.

Die Spülpumpe 7 saugt über eine Saugleitung 8 Druckmittel aus einem Tank 9 über einen Filter 10 an. Über eine Speiseleitung 11 wird das Druckmittel je nach Druckverhältnissen in eine der Arbeitsleitungen 4,5 eingespeist. Ein Druckbegrenzungsventil 12 sorgt dafür, dass ein bestimmter Pumpendruck der Spülpumpe 7 nicht überschritten wird. Bei Überschreiten des Pumpendrucks der Spülpumpe 7 öffnet das Druckbegrenzungsventil 12 und führt das Druckmittel dem Tank 9 zu.

Zur Begrenzung des Drucks in der mit Hochdruck beaufschlagten Arbeitsleitung 4, 5 sind zwei weitere Druckbegrenzungsventile 13, 14 vorgesehen. Wird in der Arbeitsleitung 4 beispielsweise ein vorgegebener Hochdruck überschritten, öffnet das Druckbegrenzungsventil 13, so dass Volumenstrom von der Arbeitsleitung 4 unmittelbar in die zweite Arbeitsleitung 5 übertreten kann, in welcher ein niedrigerer Arbeitsdruck herrscht. Da die Hydropumpe 2 reversibel ist, muss bei umgekehrten Verhältnissen das Druckbegrenzungsventil 14 und in diesem Fall ein Volumenstrom in die als Niederdruckleitung fungierende Arbeitsleitung 4 leiten.

Schließlich umfasst der dargestellte geschlossene hydraulische Kreislauf noch ein Spülventil 15, das einerseits an die beiden Arbeitsleitungen 4, 5 angeschlossen ist und dessen Ausgangsanschluss 18 andererseits unter Zwischenschaltung eines Druckbegrenzungsventils 16 an den Tank 9 angeschlossen ist. Das Spülventil 15 wird in der dargestellten Position über zwei Zentrierfedern in der Ruheposition gehalten. In dieser Position sind alle Anschlüsse des Spülventils 15 voneinander getrennt. Übersteigt der Druck in der ersten Arbeitsleitung 4 den Druck in der zweiten Arbeitsleitung 5, wird das Spülventil 15 entgegen der in der Bildebene unteren Federkraft der Zentrierfeder nach unten ausgelenkt. Das Spülventil 15 wird in Richtung einer ersten Endposition verlagert. In dieser Endposition ist die mit der anderen Arbeitsleitung 5 verbundene Entnahmeleitung 17 mit dem Ausgangsanschluss 18 verbunden. Druckmittel strömt über den Ausgangsanschluss 18 durch das Druckbegrenzungsventil 16 und anschließend über einen Kühler 19 in den Tank 9.

Wenn der Arbeitsdruck in der Bildebene unteren Arbeitsleitung 5 den Arbeitsdruck in der oberen Arbeitsleitung 4 übersteigt, schaltet das Spülventil 15 in die entgegengesetzte Richtung, so dass die Entnahmeleitung 20 mit dem Ausgangsanschluss 18 verbunden ist und dementsprechend ein Volumenstrom aus dem geschlossenen hydraulischen Kreislauf 1 ausgeleitet wird.

Das Druckbegrenzungsventil 16, das an den Ausgangsanschluss 18 des Spülventils 15 angeschlossen ist, dient zum Einstellen eines Mindestdrucks in der jeweils den Niederdruck führenden ersten oder zweiten Arbeitsleitung 4, 5.

Im Regelbetrieb wird im Bereich des Druckbegrenzungsventils 16 permanent Energie vernichtet, die nicht als Antriebsleistung zum Antrieb der Hydropumpe 2 zur Verfügung steht. Hinzu kommen noch Leckageverluste im Bereich der Hydropumpe 2 sowie des Hydromotors 6. Diese Leckageverluste werden über Leckageleitungen 21 ebenfalls dem Tank 9 zugeführt.

Figur 2 zeigt eine erste Ausführungsform der Erfindung, die sich vom Stand der Technik gemäß Figur 1 dadurch unterscheidet, dass der Ausgangsanschluss 18 des Spülventils 15 an einen hydraulischen Verbraucher 22 in Form eines Hydromotors angeschlossen ist, welcher parallel zu dem Antrieb der Spülpumpe 7 des geschlossenen hydraulischen Kreislaufs geschaltet ist. Der hydraulische Verbraucher 22 treibt ebenso wie der Antrieb über die Antriebswelle 3 die Spülpumpe 7 an, so dass weniger Energie zum Betreiben der Spülpumpe bzw. der Hydropumpe 2 notwendig ist. Das Druckmittel, das den hydraulischen Verbraucher 22 durchströmt, wird wiederum dem Tank 9 über eine Ausspeiseleitung 23 zugeführt.

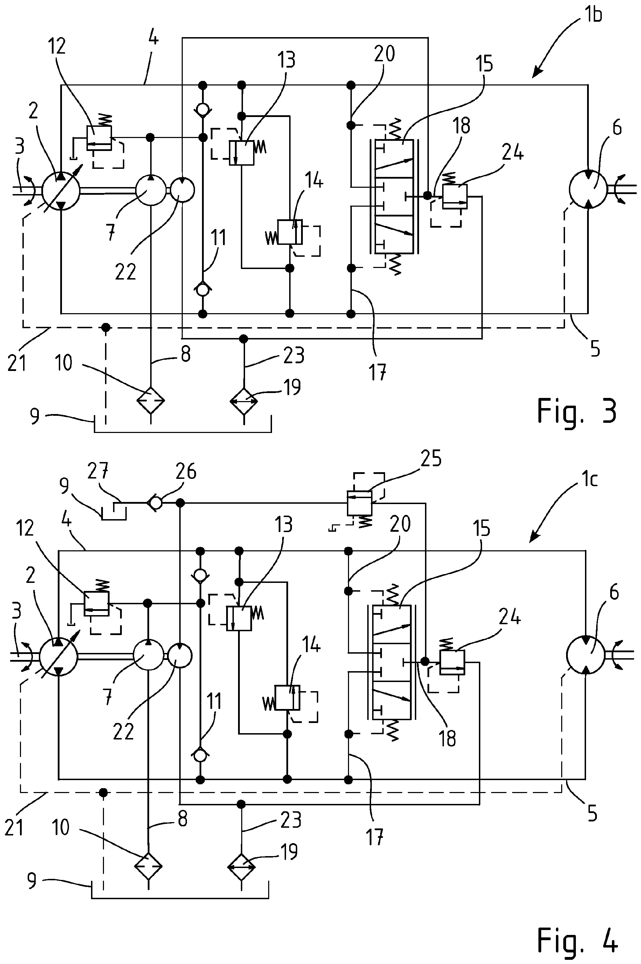

Die erfindungsgemäße Weiterbildung der Figur 3 unterscheidet sich von derjenigen der Figur 2 dadurch, dass zusätzlich zu dem hydraulischen Verbraucher 22 ein Druckbegrenzungsventil 24 vorgesehen ist, das parallel zu dem hydraulischen Verbraucher 22 geschaltet ist. Das Druckbegrenzungsventil 24, das ebenfalls hydraulisch mit dem Ausgangsanschluss 18 des Spülventils 15 verbunden ist, dient dazu, Druckspitzen in der Niederdruckseite des hydraulischen Kreises 1b zu begrenzen. Das Druckbegrenzungsventil 24 ist ebenso wie der hydraulische Verbraucher 22 an die Ausspeiseleitung 23 angeschlossen, die über den Kühler 19 in Tank 9 mündet. Bezüglich der weiteren Komponenten wird auf die Erläuterung zu Figur 1 und Figur 2 Bezug genommen.

Die Ausführungsform der Figur 4 unterscheidet sich von derjenigen der Figur 3 dadurch, dass dem hydraulischen Verbraucher 22 ein Druckventil 25 als Druckfolgeventil vorgeschaltet ist, das vor Überschreiten eines an dem Druckventil 24 eingestellten Druckes öffnet. Dadurch wird dem hydraulischen Verbraucher 22 das Druckmittel nur mit einem bestimmten Druck zur Verfügung gestellt, allerdings auch, bevor das Druckmittelvolumen über das dem Ausgangsanschluss 18 des Spülventils 15 nachgeschaltete Druckbegrenzungsventil 24 abströmt. Dennoch kann sich ein Betriebszustand ergeben, in welchem dem hydraulischen Verbraucher 22 nicht genügend Druckmittel über das Druckventil 25 zur Verfügung gestellt werden kann. Für diesen Zweck ist ein Rückschlagventil 26 mit einer Saugleitung 27 verbunden, die in den Tank 9 mündet. Das Druckmittel kann aus dem Tank 9 über das Rückschlagventil 26 angesaugt werden, so dass ein problemloser Betrieb des hydraulischen Verbrauchers 22 ohne Energierückgewinnung möglich ist. Bei dieser Anordnung kann bei extremen Betriebsparametern auf die Energierückgewinnung bewusst verzichtet werden, um dafür in anderen, häufigen Betriebszuständen eine umso höhere Energierückgewinnung zu ermöglichen.

Es kann ein hydraulischer Verbraucher 22 in Form eines Hydraulikmotors mit verstellbarem Schluckvolumen eingesetzt werden, der in Druckregelung betrieben ist, und so den passenden Druck in der Niederdruckleitung abnimmt.

Vorteilhafte Anwendungen der dargestellten Schaltungen sind hydrostatische Fahrantriebe, z. B. für Drehwerke und Winden, insbesondere bei mobilen Arbeitsmaschinen, nämlich Baggern und Kranen.

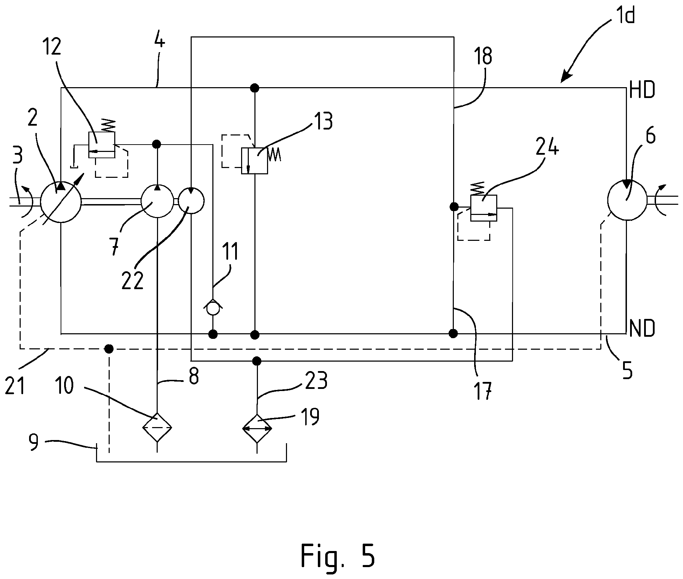

Die Ausführungsform der Figur 5 unterscheidet sich von den vorangegangenen Varianten dadurch, dass die Hochdruckseite HD und die Niederdruckseite ND festgelegt sind. Dadurch entfällt das Spülventil 15, das Rückschlagventil in der Speiseleitung 11 zur Hochdruckseite und auch eines der Druckbegrenzungsventile 14. Die genannten Bezugszeichen beziehen sich auf Figur 3. Ferner ist die in Figur 3 mit 11 bezeichnete Speiseleitung nunmehr nur noch mit der Niederdruckseite, d. h. der Arbeitsleitung 5 verbunden. Im Übrigen entspricht der Aufbau der Schaltung derjenigen der Figur 3, so dass auf die dortige Erläuterung Bezug genommen wird.

### Bezugszeichen:

- 1 -: geschlossener hydraulischer Kreislauf
- 1a -: geschlossener hydraulischer Kreislauf
- 1b -: geschlossener hydraulischer Kreislauf
- 1c -: geschlossener hydraulischer Kreislauf
- 1d -: geschlossener hydraulischer Kreislauf
- 2 -: Hydropumpe
- 3 -: Antriebswelle
- 4 -: Arbeitsleitung
- 5 -: Arbeitsleitung
- 6 -: Hydromotor
- 7 -: Spülpumpe
- 8 -: Saugleitung
- 9 -: Tank
- 10 -: Filter
- 11 -: Speiseleitung
- 12 -: Druckbegrenzungsventil
- 13 -: Druckbegrenzungsventil
- 14 -: Druckbegrenzungsventil
- 15 -: Spülventil
- 16 -: Druckbegrenzungsventil
- 17 -: Entnahmeleitung
- 18 -: Ausgangsanschluss
- 19 -: Kühler
- 20 -: Entnahmeleitung
- 21 -: Leckageleitung
- 22 -: hydraulischer Verbraucher
- 23 -: Ausspeiseleitung
- 24 -: Druckbegrenzungsventil
- 25 -: Druckventil
- 26 -: Rückschlagventil
- 27 -: Saugleitung
- HD -: Hochdruck
- ND -: Niederdruck

## Patentansprüche

1. Geschlossener hydraulischer Kreislauf zwischen einer Hydropumpe (2) und einem Hydromotor (6), die über Arbeitsleitungen (4, 5) miteinander verbunden sind, wobei eine Spülpumpe (7) vorgesehen ist, um Druckmittel in die Arbeitsleitungen (4, 5) einzuspeisen, und wobei ein Ausgangsanschluss (18) vorgesehen ist, um überschüssiges Druckmittel aus den Arbeitsleitungen (4,5) auszuspeisen, wobei dem Ausgangsanschluss (18) mindestens ein hydraulischer Verbraucher (22) nachgeschaltet ist, welcher dafür vorgesehen ist, den aus dem hydraulischen Kreislauf (1a, 1b, 1c, 1d) ausgespeisten Volumenstrom zumindest teilweise in mechanische Leistung umzusetzen, **dadurch gekennzeichnet, dass** der hydraulische Verbraucher (22) ein Hydromotor ist, welcher parallel zu einem Antrieb der Spülpumpe (7) des geschlossenen hydraulischen Kreislaufes (1a, 1b, 1c) geschaltet ist.

2. Geschlossener hydraulischer Kreislauf nach Anspruch 1, **dadurch gekennzeichnet, dass** hydraulische Verbraucher (22) in Form des Hydromotors ein festes Schluckvolumen besitzt.

3. Geschlossener hydraulischer Kreislauf nach Anspruch 1, **dadurch gekennzeichnet, dass** hydraulische Verbraucher (22) in Form des Hydromotors ein verstellbares Schluckvolumen besitzt und in Druckregelung betrieben wird.

4. Geschlossener hydraulischer Kreislauf nach einem der Ansprüche 1 bis 3, **dadurch gekennzeichnet, dass** parallel zu dem wenigstens einen hydraulischen Verbraucher (22) ein Druckbegrenzungsventil (24) zur Vermeidung von Druckspitzen in der Niederdruckseite des hydraulischen Kreises (1b, 1c) geschaltet ist.

5. Geschlossener hydraulischer Kreislauf nach Anspruch 4, **dadurch gekennzeichnet, dass** der hydraulische Verbraucher (22) über ein Druckventil (25) an den Ausgangsanschluss (18) angeschlossen ist, das bei einem niedrigeren Druck öffnet, als das Druckbegrenzungsventil (24), das an den Ausgangsanschluss (18) angeschlossen ist und zur Vermeidung von Druckspitzen in der Niederdruckseite des hydraulischen Kreises (1b, 1c, 1d) geschaltet ist.

6. Geschlossener hydraulischer Kreis nach Anspruch 5, **dadurch gekennzeichnet, dass** der hydraulische Verbraucher (22) mit einem Nachsaugventil (26) verbunden ist, das mit einem Tank (9) verbunden ist oder das mit einer Rücklaufleitung eines offenen hydraulischen Kreislaufes verbunden ist.

7. Geschlossener hydraulischer Kreislauf nach einem der Ansprüche 1 bis 6, **dadurch gekennzeichnet, dass** der Ausgangsanschluss (18) an den Ausgang eines Spülventiles (15) angeschlossen ist, das bei Kreisläufen mit nicht festgelegter Hochdruck- und Niederdruckseite eingangsseitig mit beiden Arbeitsleitungen (4, 5) verbunden ist.

## Claims

1. Closed hydraulic circuit between a hydraulic pump (2) and a hydraulic motor (6) which are interconnected by working lines (4, 5), wherein a flushing pump (7) is provided to feed pressure medium into the working lines (4, 5), and wherein an outlet connection (18) is provided to discharge excess pressure medium from the working lines (4, 5), wherein at least one hydraulic consumer (22) is connected downstream of the outlet connection (18) which consumer is provided to convert at least some of the volume flow discharged out of the hydraulic circuit (1a, 1b, 1c, 1d) into mechanical power, **characterised in that** the hydraulic consumer (22) is a hydraulic motor which is connected in parallel to a drive of the flushing pump (7) of the closed hydraulic circuit (1a, 1b, 1c).

2. Closed hydraulic circuit according to claim 1, **characterised in that** the hydraulic consumer (22) in the form of the hydraulic motor has a fixed displacement.

3. Closed hydraulic circuit according to claim 1, **characterised in that** the hydraulic consumer (22) in the form of the hydraulic motor has an adjustable displacement and is operated in pressure control.

4. Closed hydraulic circuit according to any of claims 1 to 3, **characterised in that** connected parallel to the at least one hydraulic consumer (22) is a pressure-limiting valve (24) to prevent pressure peaks in the low-pressure side of the hydraulic circuit (1b, 1c).

5. Closed hydraulic circuit according to claim 4, **characterised in that** the hydraulic consumer (22) is connected to the outlet connection (18) via a pressure valve (25) which opens at a lower pressure than the pressure-limiting valve (24) that is connected to the outlet connection (18) and is connected to prevent pressure peaks in the low-pressure side of the hydraulic circuit (1b, 1c, 1d).

6. Closed hydraulic circuit according to claim 5, **characterised in that** the hydraulic consumer (22) is connected to a suction valve (26) which is connected to a tank (9) or to a return line of an open hydraulic circuit.

7. Closed hydraulic circuit according to any of claims 1 to 6, **characterised in that** the outlet connection (18) is connected to the outlet of a flushing valve (15) which, in the case of circuits having an unfixed high-pressure and low-pressure side, is connected to both working lines (4, 5) on the inlet side.

## Revendications

1. Circuit hydraulique fermé entre une pompe hydraulique (2) et un moteur hydraulique (6) qui sont reliés l'un à l'autre par l'intermédiaire de conduites de travail (4, 5),
dans lequel une pompe de purge (7) est prévue pour introduire un fluide de pression dans les conduites de travail (4, 5),
dans lequel un raccord de sortie (18) est prévu pour faire sortir du fluide de pression excédentaire des conduites de travail (4, 5)
et dans lequel au moins un consommateur hydraulique (22) est branché en aval du raccord de sortie (18), lequel consommateur hydraulique est prévu pour transformer le débit volumique sortant du circuit hydraulique (1a, 1b, 1c, 1d) au moins en partie en énergie mécanique,
**caractérisé en ce que** le consommateur hydraulique (22) est un moteur hydraulique qui est branché en parallèle à un dispositif d'entraînement de la pompe de purge (7) du circuit hydraulique fermé (1a, 1b, 1c).

2. Circuit hydraulique fermé selon la revendication 1, **caractérisé en ce que** le consommateur hydraulique (22) en tant que moteur hydraulique a un volume absorbé fixe.

3. Circuit hydraulique fermé selon la revendication 1, **caractérisé en ce que** le consommateur hydraulique (22) en tant que moteur hydraulique a un volume absorbé réglable et est exploité en régulation de pression.

4. Circuit hydraulique fermé selon l'une des revendications 1 à 3, **caractérisé en ce qu'**une soupape de limitation de pression (24) destinée à éviter des pointes de pression du côté de la basse pression du circuit hydraulique (1b, 1c) est branchée en parallèle au - au moins un - consommateur hydraulique (22).

5. Circuit hydraulique fermé selon la revendication 4, **caractérisé en ce que** le consommateur hydraulique (22) est raccordé par l'intermédiaire d'une soupape de pression (25) au raccord de sortie (18), laquelle soupape de pression s'ouvre en présence d'une pression plus basse que celle de la soupape de limitation de pression (24) qui est raccordée au raccord de sortie (18) et qui est branchée pour éviter des pointes de pression du côté de la basse pression du circuit hydraulique (1b, 1c, 1d).

6. Circuit hydraulique fermé selon la revendication 5, **caractérisé en ce que** le consommateur hydraulique (22) est relié à une soupape de ré-aspiration (26) qui est reliée à un réservoir (9) ou qui est reliée à une conduite de retour d'un circuit hydraulique ouvert.

7. Circuit hydraulique fermé selon l'une des revendications 1 à 6, **caractérisé en ce que** le raccord de sortie (18) est raccordé à la sortie d'une soupape de purge (15) qui est reliée côté entrée, dans le cas de circuits avec côté haute pression et basse pression non fixé, à deux conduites de travail (4, 5).
